# EUROPEAN PATENT SPECIFICATION

(11) **EP 2 979 193 B1**
(45) Date of publication and mention of the grant of the patent: **28.04.2021**
(21) Application number: 13879854.1
(22) Date of filing: 28.03.2013
(51) Int. Cl.: G06F 12/02, G06F 13/14, G06F 13/38, G06F 3/06, G06F 12/06, G06F 12/10

(54) **SHARED MEMORY SYSTEM**
GETEILTES SPEICHERSYSTEM
SYSTÈME DE MÉMOIRE PARTAGÉE

(43) Date of publication of application: 03.02.2016
(73) Proprietor: Hewlett Packard Enterprise Development LP, Houston, TX 77070 (US)
(72) Inventor: LESARTRE, Gregg, B., Ft. Collins, Colorado 80528 (US); WHEELER, Andrew, R., Ft. Collins, Colorado 80528 (US); HERRELL, Russ, W., Ft. Collins, Colorado 80528 (US)
(74) Representative: Iqbal, Md Mash-Hud
(86) International application number: PCT/US2013/034491
(87) International publication number: WO 2014/158177

(56) References cited:
- EP-A2- 1 069 512
- EP-A2- 1 396 790
- GB-A- 2 418 753
- US-A1- 2002 032 823
- US-A1- 2002 032 823
- US-A1- 2005 044 339
- US-A1- 2010 070 718
- US-A1- 2010 070 718
- US-A1- 2010 174 872
- US-A1- 2012 226 865

## Description

### BACKGROUND

Modern computing systems can execute a wide range of software applications that may use different amounts of resources such as processor execution time and memory consumption, among others. For example, some software applications may perform complex operations that result in the use of a significant amount of processor execution time. In other examples, some software applications may be memory intensive and thus use a large amount of memory to store results during execution of the software applications. In some embodiments, software applications can share data between multiple computing devices.

EP1396790 A2 discloses a remote translation mechanism for a multi-node system including a method for remotely translating a virtual memory address into a physical memory address in a multi-node system. The method includes providing the virtual memory address at a source node, determining that the virtual memory address is to be sent to a remote node, and translating the virtual memory address on the remote node into a physical memory address using a remote-translation table (RTT).

GB 2418753 A discloses a high-performance computer system that has a plurality of compute nodes interconnected by an inter-node communication network. The compute nodes include local packetized interconnects and memories. Shared memory between compute nodes is emulated by tunneling packetized interconnect packets in inter-node communication network packets. A memory region on one of the compute nodes is used as a window into a memory region in another compute node.

### BRIEF DESCRIPTION

Certain examples are described in the following detailed description and in reference to the drawings, in which:
Fig. 1 is a block diagram of an example computing system that can share data between a local memory device and an external memory device;
Fig. 2 is a process flow diagram illustrating an example of a method for sharing data between a local memory device and an external memory device;
Fig. 3 is an example of a configuration table that can be used to translate between a memory address space of a local memory device and a memory address space of an external memory device;
Fig. 4 is a process flow diagram illustrating an example of a method for requesting data from an external memory device; and
Fig. 5 is a block diagram depicting an example of a tangible, non-transitory computer-readable medium that can share data between a local memory device and an external memory device.

### Description of the Embodiments

According to embodiments of the subject matter described herein, a computing system can share data between a local memory device and an external memory device using two separate memory spaces. In some embodiments, a local memory device resides in a first computing system, while an external memory device resides in a second computing system. The local memory device and the external memory device can both store data that is accessible from a processor through a memory controller using memory address spaces. A memory address space, as referred to herein, includes any suitable range of discrete memory addresses, wherein each discrete memory address can correspond to data stored in any suitable computing device. In some examples, a discrete memory address may correspond to a sector of a hard drive, solid state drive, a network host, a peripheral storage device, or a cache line in DRAM, PCM, STT_MRAM, or ReRAM memory, among others. In some embodiments, a computing system can retrieve data stored in an external memory device by translating a local memory address space corresponding with a local memory device into an external memory address space corresponding with an external memory device.

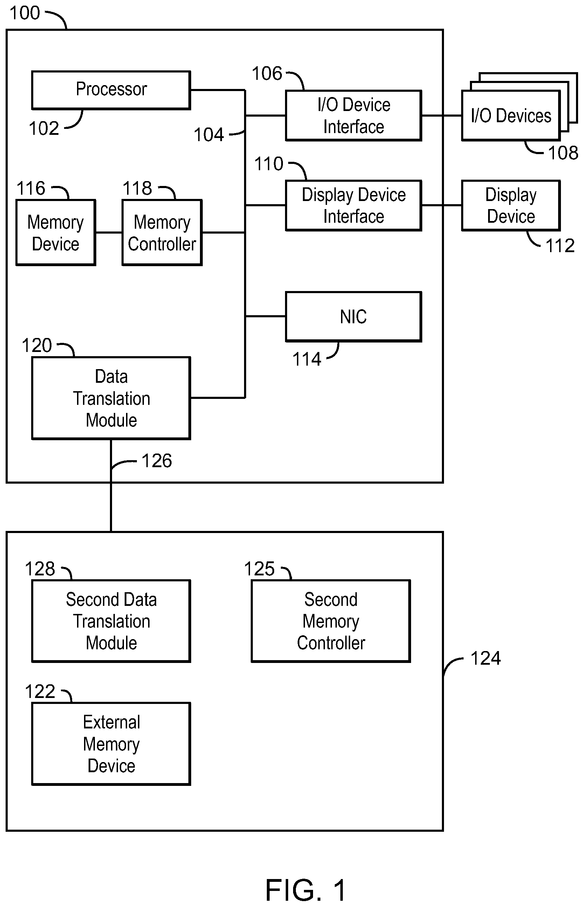

Fig. 1 is a block diagram of an example of a computing system 100 that can share data between a local memory device and an external memory device. The computing system 100 may include, for example, a server computer, a mobile phone, laptop computer, desktop computer, or tablet computer, among others. The computing system 100 may include a processor 102 that is adapted to execute stored instructions. The processor 102 can be a single core processor, a multi-core processor, a computing cluster, or any number of other appropriate configurations.

The processor 102 may be connected through a system bus 104 (e.g., AMBA®, PCI®, PCI Express®, HyperTransport®, Serial ATA, among others) to an input/output (I/O) device interface 106 adapted to connect the computing system 100 to one or more I/O devices 108. The I/O devices 108 may include, for example, a keyboard and a pointing device, wherein the pointing device may include a touchpad or a touchscreen, among others. The I/O devices 108 may be built-in components of the computing system 100, or may be devices that are externally connected to the computing system 100.

The processor 102 may also be linked through the system bus 104 to a display device interface 110 adapted to connect the computing system 100 to a display device 112. The display device 112 may include a display screen that is a built-in component of the computing system 100. The display device 112 may also include a computer monitor, television, or projector, among others, that is externally connected to the computing system 100. Additionally, the processor 102 may also be linked through the system bus 104 to a network interface card (NIC) 114. The NIC 114 may be adapted to connect the computing system 100 through the system bus 104 to a network (not depicted). The network (not depicted) may be a wide area network (WAN), local area network (LAN), or the Internet, among others.

The processor 102 may also be linked through the system bus 104 to a memory device 116. In some embodiments, the memory device 116 can include random access memory (e.g., SRAM, DRAM, eDRAM, EDO RAM, DDR RAM, RRAM®, PRAM, among others), read only memory (e.g., Mask ROM, EPROM, EEPROM, among others), non-volatile memory (PCM, STT_MRAM, ReRAM, Memristor), or any other suitable memory systems. In some examples, the memory device 116 can include any suitable number of memory addresses that each correspond to any suitable number of data values. In some embodiments, the memory addresses associated with the memory device 116 correspond to a local memory address space. For example, the local memory address space may include any suitable number of unambiguous memory addresses which correspond to the stored data in the memory device 116.

In some embodiments, the memory device 116 can be accessed by the processor 102 through a memory controller 118. The memory controller 118 can include logic that enables a processor 102 to read data from the memory device 116 and write data to the memory device 116.

The processor may also be linked through the system bus 104 to a data translation module 120. In some embodiments, the data translation module 120 may be integrated into the memory controller 118. In some embodiments, the data translation module120 can detect a request for data from an external memory device 122 in a second computing device 124 through a second memory controller 125 and a system connect 126 (e.g., Ethernet, PCI®, PCI Express®, HyperTransport®, Serial ATA, message passing interface, among others). The external memory device 122 can include random access memory (e.g., SRAM, DRAM, eDRAM, EDO RAM, DDR RAM, RRAM®, PRAM, among others), read only memory (e.g., Mask ROM, EPROM, EEPROM, among others), non-volatile memory, or any other suitable memory systems. In some embodiments, the external memory device 122 can include the second memory controller 125. In some embodiments, each memory device, such as the memory device 116 and the external memory device 122, can store data using a unique memory address space. For example, the external memory device 122 may access stored data by associating the stored data with memory addresses in an external memory address space. Similarly, the memory device 116 may access stored data by associating the stored data with memory addresses in the local memory address space.

In some embodiments, the second computing device 124 may also include a second data translation module 128 that can store data in the external memory device 122. Periodically, the second data translation module 128 can retrieve data from the external memory device 122 that is requested by the data translation module 120 in the computing device 100. The second data translation module 128 may also send the requested data retrieved from the external memory device 122 to the data translation module 120 in the computing system 100. In some embodiments, the data translation module 120 can translate a memory address associated with the requested data from the external memory address space to a local memory address space. The data translation module 120 can then provide the requested data to any requesting operating system, application, or hardware component using the memory address associated with the local memory address space.

It is to be understood that the block diagram of Fig. 1 is not intended to indicate that the computing system 100 is to include all of the components shown in Fig. 1. Rather, the computing system 100 can include fewer or additional components not illustrated in Fig. 1 (e.g., additional memory devices, video cards, additional network interfaces, etc.). Furthermore, any of the functionalities of the data translation module 120 may be partially, or entirely, implemented in any suitable hardware component such as the processor 102. For example, the functionality may be implemented with an application specific integrated circuit, in logic implemented in the processor 102, in a memory device 116, in a memory controller, or in a coprocessor on a peripheral device, among others.

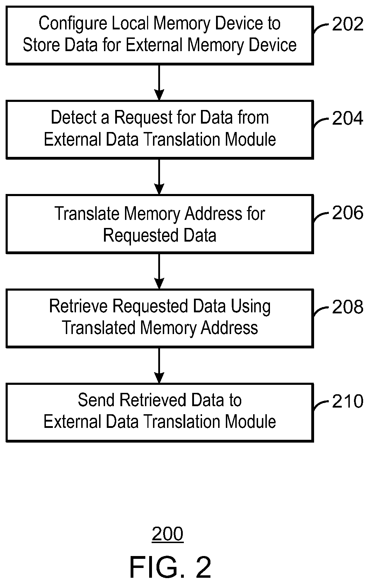

Fig. 2 is a process flow diagram illustrating an example of a method for sharing data between a local memory device and an external memory device. The method 200 can be implemented with any suitable computing device, such as the computing system 100 of Fig. 1.

At block 202, the data translation module 120 of a first computing device can configure the local memory device to store data for the external memory device. The configuration includes allocating any suitable portion of the local memory device to store data for the external memory device. For example, the data translation module 120 can use any suitable allocation technique, such as dynamic memory allocation or static memory allocation, to allocate a portion of the local memory device to store data for an external storage device. The processor in the computing device with the local memory device cannot detect that the memory allocated to a remote node or a second computing system is present. In some examples, the data translation module 120 can manage the allocation of memory space in the local memory device during the initialization of a computing device such as the boot process. In some examples, the data translation module 120 can also manage the allocation of memory space in the local memory device dynamically. For example, the data translation module 120 may reallocate a different amount of memory in a local memory device for external data storage in response to the termination of a software application.

At block 204, the data translation module 120 can detect a request for data from an external data translation module. In some embodiments, the request for data from an external data translation module can be transmitted to the local memory device through the data translation module 120. For example, the data translation module 120 may connect to any suitable system interconnect such as a bus, Ethernet, infiniband, or PCIe, among others. When an external data translation module in a second computing system is to retrieve data from the local memory device, the external data translation module can transmit a request for data to the data translation module 120 of the first computing device through the system interconnect.

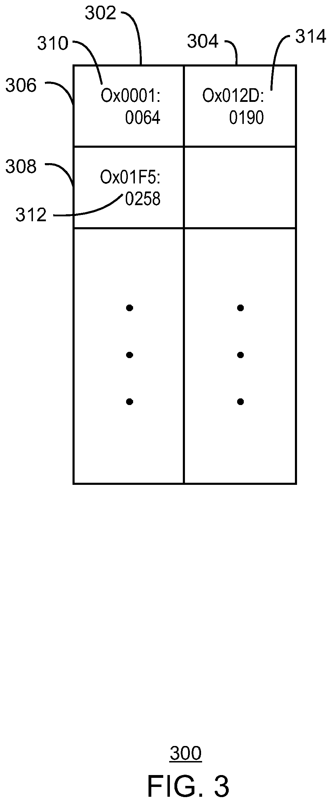

At block 206, the data translation module 120 can translate a memory address that corresponds to the requested data from an external memory address space to a local memory address space. In some embodiments, the data translation module 120 can maintain a configuration table that includes a list of memory addresses in the local memory address space and a list of corresponding memory addresses in the external memory address space. The configuration table can enable the data translation module 120 to translate a memory address from a first memory address space to a second memory address space. In some embodiments, the configuration table is stored in a memory controller in each computing system. The configuration table can be updated periodically such as during initialization of the computing system or after the termination of an application, among other scenarios. The configuration table is described in greater detail below in relation to Fig. 3.

At block 208, the data translation module 120 can retrieve the requested data based on a local memory address from the local memory address space. In some embodiments, the data translation module 120 can use the local memory address from the configuration table to retrieve data requested from an external memory device. At block 210, the data translation module 120 can send the retrieved data to an external data translation module in a second computing system. In some embodiments, the data translation module 120 can transmit the retrieved data to the external memory device using any suitable communication protocol such as TCP/IP, or a message passing interface, among others. The process flow diagram of Fig. 2 can include any number of additional steps within the method 200, depending on the specific application.

Fig. 3 is an example of a configuration table that can be used translate between a memory address space of a local memory device and a memory address space of an external memory device. As discussed above, the configuration table 300 can be implemented with a data translation module 120 in any suitable computing system, such as the computing system 100 of Fig. 1, among others.

The configuration table 300 can include any suitable number of columns 302 and 304 and rows 306 and 308. In some embodiments, the columns 302 and 304 can include memory address ranges in separate memory address spaces that correspond with the same data value. For example, one column 302 or 304 can include any number of memory address ranges in a local memory address space or an external memory address space. The rows 306 or 308 from the configuration table 300 can include a memory address range from each memory address space that corresponds with a data value. For example, the configuration table 300 may include memory address ranges that correspond with a data block from any number of computing devices.

In some embodiments, the configuration table 300 may include two columns 302 and 304, wherein each column 302 or 304 includes the memory address ranges for a particular memory address space for a computing device. For example, each memory address range from row 306 or 308 of the configuration table 300 corresponds to the same data block. In the example configuration table 300, the memory address ranges 0x0001:0064 310 and 0x012D:0190 312 may be memory address ranges for data values that correspond to a local memory address space. The memory address range 0x01F5:0258 314 may be a memory address range that corresponds to data values in an external memory address space. In some examples, each data value can correspond to a local memory address and multiple, external memory addresses.

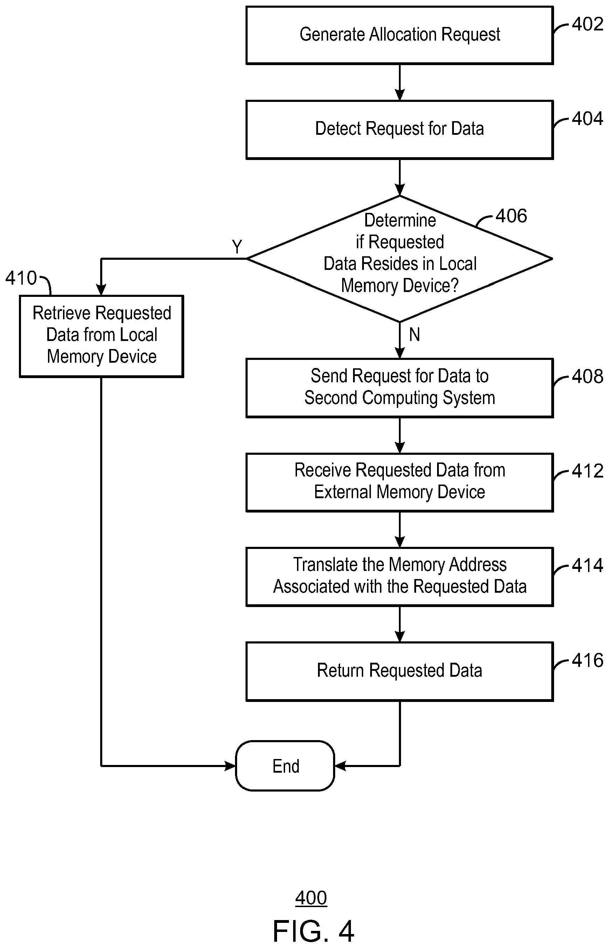

Fig. 4 is a process flow diagram illustrating an example method for requesting data from an external memory device. The method 400 can be implemented in any suitable computing system, such as the computing system 100 of Fig. 1.

At block 402, the data translation module 120 can generate an allocation request. An allocation request, as referred to herein, can instruct a second computing system to allocate memory for a first memory device. For example, the allocation request may indicate any suitable amount of data from a first computing device that may be stored on a second computing device. In some embodiments, the second computing device can use any suitable technique to allocate the data in a memory device in the second computing device.

At block 404, the data translation module 120 can detect a request for data. In some embodiments, the request for data can be generated by an operating system, a software application, or a hardware component, among others. At block 406, the data translation module 120 can determine if the requested data resides in a local memory device or an external memory device. The data translation module 120 detects if the requested data has a memory address corresponding to a local memory device or an external memory device. The data translation module 120 translates the memory address corresponding to the requested data from a local memory address space to an external memory address space. If the requested data resides in an external memory device, the process flow continues at block 408. If the requested data resides in a local memory device, the process flow continues at block 410.

At block 408, the data translation module 120 sends a request for data to a second computing system that includes an external memory device. As discussed above, the external memory device stores data locally in the second computing device and stores data externally for a first computing device. In some embodiments, the request for data includes any suitable number of memory addresses that correspond to the external memory address space.

At block 412, the data translation module 120 receives the requested data from the external memory device in the second computing system. In some embodiments, the data translation module 120 receives any suitable number of data values in response to the request for data. In some examples, the received data may have memory addresses that correspond to the external memory address space.

At block 414, the data translation module 120 can translate the external memory addresses to local memory addresses. For example, the data translation module 120 can use a configuration table to translate the memory addresses from the external memory address space into memory addresses from the local memory address space. In some examples, the data translation module 120 can reverse the translation of the memory address in block 406 by translating the memory address from an external memory address space to a local memory address space.

At block 416, the data translation module 120 can return the requested data based on the memory address from the local memory address space. The data translation module 120 can return the requested data to any suitable requestor such as an operating system, application, or hardware component, among others. The process flow ends at block 418.

If the requested data resides in a local memory device at block 406, the process flow continues at block 410. At block 410, the data translation module 120 uses the local memory address space to retrieve the requested data from a local memory device. The process flow ends at block 418.

The process flow diagram of Fig. 4 is not intended to indicate that the operations of the method 400 are to be executed in any particular order, or that all of the operations of the method 400 are to be included in every case. Further, any number of additional steps may be included within the method 400, depending on the specific application.

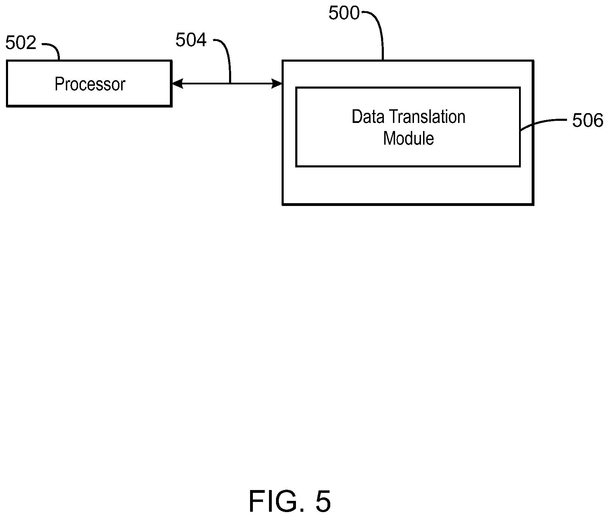

Figure 5 is a block diagram showing a tangible, non-transitory, computer-readable medium 500 that can implement coherency in a computing device with reflective memory. The tangible, non-transitory, computer-readable medium 500 may be accessed by a processor 502 over a computer bus 504. Furthermore, the tangible, non-transitory, computer-readable medium 500 may include computer-executable instructions to direct the processor 502 to perform the steps of the current method.

The various software components discussed herein may be stored on the tangible, non-transitory, computer-readable medium 500, as indicated in Fig. 5. For example, a data translation module 506 can translate a memory address from a local memory address space to an external memory address space and request data stored in an external memory device using the external memory address. It is to be understood that any number of additional software components not shown in Fig. 5 may be included within the tangible, non-transitory, computer-readable medium 500, depending on the specific application.

## Claims

1. A computing system (100) for retrieving data from an external memory device (122) of a second computing system (124), the computing system (100) comprising:
a local memory device (116) to store data; **characterized in that** the computing system further comprises a data translation module (120) to:
detect a request for data, said request generated by a requestor;
translate a local memory address corresponding to the requested data from a local memory address space of the local memory device to an external memory address space;
determine that the requested data resides in the external memory device (122) of the second computing system, the external memory device comprising a portion allocated for data storage for the local memory device wherein a processor of the second computing system cannot detect the presence of the portion of the external memory device, which is allocated for data storage for the local memory device, in the second computing system,
send the request for data to the external memory device, the request for data including an external memory address corresponding to the external memory address space;
receive the requested data from the external memory device;
translate the external memory address corresponding to the requested data from the external memory address space to the local memory address corresponding to the local memory address space of the local memory device; and
return the requested data with the local memory address to the requestor.

2. The system of claim 1, wherein the requestor comprises one of an application, an operating system, and a hardware component.

3. The system of claim 1, wherein the data translation module comprises a configuration table, wherein the configuration table comprises a list of memory addresses from the external memory address space and a list of memory addresses from the local memory address space.

4. The system of claim 3, wherein the configuration table comprises a list of memory addresses from at least two external memory address spaces that correspond to at least two computing devices.

5. A non-transitory, computer-readable medium (500) comprising a plurality of instructions that, in response to being executed on a computing device comprising a local memory device, cause the computing device to:
detect a request for data, said request generated by a requestor;
translate a local memory address corresponding to the requested data from a local memory address space of the local memory device to an external memory address space;
determine that the requested data resides in a portion of an external memory device of a further computing device, said portion allocated for data storage for the local memory device, wherein a processor of the further computing device cannot detect the presence of the portion of the external memory device, which is allocated for data storage for the local memory device, in the further computing device;
send the request for data to the external memory device, the request for data including an external memory address corresponding to the external memory address space;
receive the requested data from the external memory device;
translate the external memory address corresponding to the requested data from the external memory address space to the local memory address corresponding to the local memory address space of the local memory device; and
return the requested data with the local memory address to the requestor.

6. The computer-readable medium of claim 5, wherein the requestor comprises one of an application, an operating system, and a hardware component.

7. The computer-readable medium of claim 5, comprising a plurality of instructions that, in response to being executed on a computing device, cause the computing device to generate a configuration table, wherein the configuration table comprises a list of memory addresses from the external memory address space and a list of memory addresses from the local memory address space.

## Patentansprüche

1. Rechensystem (100) zum Abrufen von Daten aus einer externen Speichervorrichtung (122) eines zweiten Rechensystem (124), wobei das Rechensystem (100) Folgendes umfasst:
eine lokale Speichervorrichtung (116), um Daten zu speichern;
**dadurch gekennzeichnet, dass** das Rechensystem ferner ein Datenübersetzungsmodul (120) für Folgendes umfasst:
Erfassen einer Datenanforderung, wobei die Anforderung durch einen Anforderer erzeugt wird;
Übersetzen einer lokalen Speicheradresse, die den angeforderten Daten entspricht, aus einem Adressraum eines lokalen Speichers der lokalen Speichervorrichtung in einen Adressraum eines externen Speichers;
Bestimmen, dass sich die angeforderten Daten in der externen Speichervorrichtung (122) des zweiten Rechensystems befinden, wobei die externe Speichervorrichtung einen Anteil umfasst, der für eine Datenspeicherung für die lokale Speichervorrichtung reserviert ist, wobei ein Prozessor des zweiten Rechensystems das Vorhandensein des Anteils der externen Speichervorrichtung, der für eine Datenspeicherung für die lokale Speichervorrichtung reserviert ist, in dem zweiten Rechensystem nicht erfassen kann, Senden der Datenanforderung an die externe Speichervorrichtung, wobei die Datenanforderung eine Adresse des externen Speichers beinhaltet, die dem Adressraum des externen Speichers entspricht;
Empfangen der angeforderten Daten aus der externen Speichervorrichtung;
Übersetzen der Adresse des externen Speichers, die den angeforderten Daten entspricht, aus dem Adressraum des externen Speichers in die lokale Speicheradresse, die dem Adressraum des lokalen Speichers der lokalen Speichervorrichtung entspricht; und
Zurückgeben der angeforderten Daten mit der Adresse des lokalen Speichers an den Anforderer.

2. System nach Anspruch 1, wobei der Anforderer eine Anwendung, ein Betriebssystem oder eine Hardwarekomponente umfasst.

3. System nach Anspruch 1, wobei das Datenübersetzungsmodul eine Konfigurationstabelle umfasst, wobei die Konfigurationstabelle eine Liste von Speicheradressen aus dem Adressraum des externen Speichers und eine Liste von Speicheradressen aus dem Adressraum des lokalen Speichers umfasst.

4. System nach Anspruch 3, wobei die Konfigurationstabelle eine Liste von Speicheradressen aus wenigstens zwei Adressräumen des externen Speichers umfasst, die wenigstens zwei Rechenvorrichtungen entsprechen.

5. Nichtflüchtiges, computerlesbares Medium (500), das mehrere Anweisungen umfasst, die als Reaktion darauf, dass sie auf einer Rechenvorrichtung ausgeführt werden, die eine lokale Speichervorrichtung umfasst, die Rechenvorrichtung zu Folgendem veranlassen:
Erfassen einer Datenanforderung, wobei die Anforderung durch einen Anforderer erzeugt wird;
Übersetzen einer lokalen Speicheradresse, die den angeforderten Daten entspricht, aus einem Adressraum des lokalen Speichers der lokalen Speichervorrichtung in einen Adressraum des externen Speichers;
Bestimmen, dass sich die angeforderten Daten in einem Anteil einer externen Speichervorrichtung eines weiteren Rechensystems befinden, wobei der Anteil für eine Datenspeicherung für die lokale Speichervorrichtung reserviert ist, wobei ein Prozessor der weiteren Rechenvorrichtung das Vorhandensein des Anteils der externen Speichervorrichtung, der für eine Datenspeicherung für die lokale Speichervorrichtung reserviert ist, in der weiteren Rechenvorrichtung nicht erfassen kann;
Senden der Datenanforderung an die externe Speichervorrichtung, wobei die Datenanforderung eine Adresse des externen Speichers beinhaltet, die dem Adressraum des externen Speichers entspricht;
Empfangen der angeforderten Daten aus der externen Speichervorrichtung;
Übersetzen der Adresse des externen Speichers, die den angeforderten Daten entspricht, aus dem Adressraum des externen Speichers in die lokale Speicheradresse, die dem Adressraum des lokalen Speichers der lokalen Speichervorrichtung entspricht; und
Zurückgeben der angeforderten Daten mit der Adresse des lokalen Speichers an den Anforderer.

6. Computerlesbares Medium nach Anspruch 5, wobei der Anforderer eine Anwendung, ein Betriebssystem oder eine Hardwarekomponente umfasst.

7. Computerlesbares Medium nach Anspruch 5, das mehrere Anweisungen umfasst, die als Reaktion darauf, dass sie auf einer Computervorrichtung ausgeführt werden, die Computervorrichtung dazu veranlassen, eine Konfigurationstabelle zu erzeugen, wobei die Konfigurationstabelle eine Liste von Speicheradressen aus dem Adressraum des externen Speichers und eine Liste von Speicheradressen aus dem Adressraum des lokalen Speichers umfasst.

## Revendications

1. Système informatique (100) destiné à la récupération des données d'un dispositif de mémoire externe (122) d'un second système informatique (124), le système informatique (100) comprenant :
un dispositif de mémoire locale (116) pour stocker des données ;
**caractérisé en ce que** le système informatique comprend en outre un module de traduction de données (120) pour :
détecter une demande de données, ladite demande étant générée par un demandeur ;
traduire une adresse de mémoire locale correspondant aux données demandées d'un espace d'adressage de mémoire locale du dispositif de mémoire locale en un espace d'adressage de mémoire externe ;
déterminer que les données demandées résident dans le dispositif de mémoire externe (122) du second système informatique, le dispositif de mémoire externe comprenant une partie allouée au stockage de données pour le dispositif de mémoire locale, un processeur du second système informatique ne pouvant pas détecter la présence de la partie du dispositif de mémoire externe, qui est allouée au stockage de données pour le dispositif de mémoire locale, dans le second système informatique,
envoyer la demande de données au dispositif de mémoire externe, la demande de données comportant une adresse de mémoire externe correspondant à l'espace d'adressage de mémoire externe ;
recevoir les données demandées du dispositif de mémoire externe ;
traduire l'adresse de mémoire externe correspondant aux données demandées de l'espace d'adressage de mémoire externe en adresse de mémoire locale correspondant à l'espace d'adressage de mémoire locale du dispositif de mémoire locale ; et
renvoyer les données demandées avec l'adresse de mémoire locale au demandeur.

2. Système selon la revendication 1, dans lequel le demandeur comprend l'un parmi une application, un système d'exploitation et un composant matériel.

3. Système selon la revendication 1, dans lequel le module de traduction de données comprend une table de configuration, la table de configuration comprenant une liste d'adresses de mémoire de l'espace d'adressage de mémoire externe et une liste d'adresses de mémoire de l'espace d'adressage de mémoire locale.

4. Système selon la revendication 3, dans lequel la table de configuration comprend une liste d'adresses de mémoire d'au moins deux espaces d'adressage de mémoire externe qui correspondent à au moins deux dispositifs informatiques.

5. Support non transitoire lisible par ordinateur (500) comprenant une pluralité d'instructions qui, en réponse à leur exécution sur un dispositif informatique comprenant un dispositif de mémoire locale, amènent le dispositif informatique à :
détecter une demande de données, ladite demande étant générée par un demandeur ;
traduire une adresse de mémoire locale correspondant aux données demandées d'un espace d'adressage de mémoire locale du dispositif de mémoire locale en un espace d'adressage de mémoire externe ;
déterminer que les données demandées résident dans une partie d'un dispositif de mémoire externe d'un autre dispositif informatique, ladite partie étant allouée au stockage de données pour le dispositif de mémoire locale, un processeur de l'autre dispositif informatique ne pouvant pas détecter la présence de la partie du dispositif de mémoire externe, qui est allouée au stockage de données pour le dispositif de mémoire locale, dans l'autre dispositif informatique ;
envoyer la demande de données au dispositif de mémoire externe, la demande de données comportant une adresse de mémoire externe correspondant à l'espace d'adressage de mémoire externe ;
recevoir les données demandées du dispositif de mémoire externe ;
traduire l'adresse de mémoire externe correspondant aux données demandées de l'espace d'adressage de mémoire externe en adresse de mémoire locale correspondant à l'espace d'adressage de mémoire locale du dispositif de mémoire locale ; et
renvoyer les données demandées avec l'adresse de mémoire locale au demandeur.

6. Support lisible par ordinateur selon la revendication 5, dans lequel le demandeur comprend l'un parmi une application, un système d'exploitation et un composant matériel.

7. Support lisible par ordinateur selon la revendication 5, comprenant une pluralité d'instructions qui, en réponse à leur exécution sur un dispositif informatique, amènent le dispositif informatique à générer une table de configuration, la table de configuration comprenant une liste d'adresses de mémoire de l'espace d'adressage de mémoire externe et une liste d'adresses de mémoire de l'espace d'adressage de mémoire locale.
